# EUROPEAN PATENT APPLICATION

(11) **EP 1 921 366 A1**
(43) Date of publication of application: **14.05.2008**
(21) Application number: 05781498.0
(22) Date of filing: 30.08.2005
(51) Int. Cl.: F16L 59/147, D04H 1/42

(54) **PROCESS FOR PRODUCING INORGANIC FIBER MADE HEAT INSULATION TUBE**

(71) Applicant: Paramount Glass Manufacturing Co., Ltd., Koriyama-shi, Fukushima 963-8017 (JP)
(72) Inventor: OTAKI, Keiji, Koriyama-shi, Fukushima 963-8846 (JP); YODA, Mitsuji, Koriyama-shi, Fukushima 963-8874 (JP); HARADA, Yoshiyuki, Koriyama-shi, Fukushima 963-8034 (JP)
(74) Representative: Bannerman, David Gardner
(86) International application number: PCT/JP2005/015738
(87) International publication number: WO 2007/026394

(57) **Abstract**

In a process for producing an inorganic fiber made heat insulation tube, the wind-up operation includes the steps of supporting and rotating a hollow cylindrical core metal having its surface provided with a multiplicity of pores; heating the core metal; introducing vacuum in the interior of the core metal to thereby cause an inorganic fiber mat to be drawn near the core metal by vacuuming and thereafter, while compressing the inorganic fiber mat, rotating the core metal at given rotational speed so that the inorganic fiber mat is wound round the core metal to thereby obtain a tubular matter; and delivering the tubular matter to a position where a subsequent contour restraining operation is carried out.

## Description

### TECHNICAL FIELD

The present invention relates to a process for producing an inorganic fiber made heat insulation tube used for water supply and drainage pipes, refrigerant pipes and the like.

### BACKGROUND ART

The process for producing an inorganic fiber made heat insulation tube made of fibers (glass wool, rock wool) derived from glass and minerals has the steps of fiberizing and fiber collecting operation of fiberizing molten glass or a molten mineral and coating an adhesive (binder) to the fibers to make them an unhardened inorganic fiber mat, a delivering operation of delivering the inorganic fiber mat to the next operation, a wind-up operation of winding the inorganic fiber mat around a cylindrical core bar to form a tubular body, a contour finishing operation of adjusting the contour of the tubular body, a drying operation of drying the tubular body, and a core removing operation of removing the core bar from the tubular body and other operations.

Patent Documents 1 and 2 disclose the wind-up operation among the above described operations. In each of the wind-up operations disclosed in Patent Documents 1 and 2, forward movement of the inorganic fiber mat is stopped by a guide cover, and the leading end of the inorganic fiber mat is pushed up by blow of air from the blower provided below a net conveyor, so that the mat is wound up around the core bar.

Further, Patent Document 3 discloses the contour finishing operation of adjusting the contour among the above described operations. In the contour finishing operation disclosed in Patent Document 3, the tubular body is mounted in a gap between the two rotating fairing rollers, and is rotated, whereby adjustment of the contour of the tubular body is performed.
Patent Document 1: JP-B-48-028328
Patent Document 2: JP-B-52-009864
Patent Document 3: JP-B-52-010217

### DISCLOSURE OF THE INVENTION

However, in the wind-up operation disclosed in the above described Patent Documents 1 and 2, replacement of the guide cover is required at the time of product changeover, so that cost of maintenance and equipment becomes high, and much time is required for changeover. Further, since the leading end of the inorganic fiber mat contacts the guide cover, the inorganic fiber mat leading end portion deforms, which results in the cause of unfavorable appearance of the product.

In the contour finishing operation disclosed in the above described Patent Document 3, since total weight of the tubular body loads on the fairing roller, a variation occurs to the thickness of the tubular body due to the self weight of the core bar. Further, the tubular body is placed on the fairing roller in the stationary state, and therefore, peeling, a scar and the like will occur to the surface of the tubular body in the portion contacting with the fairing roller directly after the start of the fairing operation. Moreover, the fairing roller is heated, and therefore, if the tubular body is mounted thereon for a long stretch of time, the surface of the tubular body may break.

The present invention is made in view of these problems, and an object of the present invention is to provide a process for producing an inorganic fiber made heat insulation tube which is capable of preventing deformation of inorganic fibers.

Another object of the present invention is to provide a process for producing of an inorganic fiber made heat insulation tube in which replacement of the guide cover is not required at the time of product changeover, and cost of maintenance and equipment can be lowered.

Still another object of the present invention is to provide a process for producing an inorganic fiber made heat insulation tube in which the thickness of a tubular body is kept substantially constant, occurrence of peeling, a scar and the like to the surface of the tubular body in a portion contacting with a fairing roller and breakage of the surface of the tubular body can be prevented.

In order to solve the above described problems, a process for producing an inorganic fiber made heat insulation tube according to the invention described in claim 1 is such that in a process for producing an inorganic fiber made heat insulation tube having a fiberizing and fiber collecting operation of fiberizing molten glass or a molten mineral, and coating it with an adhesive to make it an unhardened inorganic fiber mat, a wind-up operation of winding the inorganic fiber mat around a cylindrical core bar to make it a tubular body, a contour finishing operation of adjusting a contour of the tubular body, a drying operation of drying the tubular body and a core removing operation of separating the tubular body and the core bar, the wind-up operation includes the steps of supporting and rotating a hollow cylindrical core bar having a surface provided with numerous pores, heating the core bar, introducing vacuum in an interior of the core bar, drawing the inorganic fiber mat to the core bar by vacuum drawing, thereafter, rotating the core bar at a predetermined rotational speed while compressing the inorganic fiber mat, and winding the inorganic fiber mat around the core bar to thereby obtain a tubular body, and delivering the tubular body to a position where a subsequent contour finishing operation is performed.

In the wind-up operation, the core bar is heated, and the inorganic fiber mat is wound around the core bar while being compressed. On this occasion, by the heat of the core bar and compression of the inorganic fiber mat, the adhesive is hardened and bonded to the core bar surface.

Retention time of the vacuum drawing is preferably variable.

Further, in the step of winding the inorganic fiber mat around the core bar, the inorganic fiber mat is preferably pressed against the core bar by air blow.

The rotational speed of the core bar can be made constant, or variable.

Further, in order to solve the above described problems, a process for producing an inorganic fiber made heat insulation tube according to the invention described in claim 6 is such that in a process for producing an inorganic fiber made heat insulation tube having a fiberizing and fiber collecting operation of fiberizing molten glass or a molten mineral, and coating it with an adhesive to make it an unhardened inorganic fiber mat, a wind-up operation of winding the inorganic fiber mat around a cylindrical core bar to make it a tubular body, a contour finishing operation of adjusting a contour of the tubular body, a drying operation of drying the tubular body, and a core removing operation of separating the tubular body and the core bar, the contour finishing operation includes the steps of delivering the tubular body onto a first contour finishing roller while supporting core bar portions extending from both ends of the tubular body delivered from the wind-up operation by a core bar support member with a top side thereof opened, supporting and rotating the core bar portions extending from both the ends of a hollow cylindrical tubular body by two pairs of core bar receiving rollers, fairing a contour of the tubular body by the unheated first contour finishing roller, delivering the tubular member onto a second contour finishing roller while supporting the core bar portions extending from both the ends of the tubular body by the core bar support member, supporting and rotating the core bar portions extending from both the ends of the tubular body by the two pairs of core bar receiving rollers, and fairing the contour of the tubular body by the heated second contour finishing roller.

At least one set of the first contour finishing roller, and one set of the second contour finishing roller are preferably provided.

Further, rotational speeds of the core bar receiving roller, and the first and the second contour finishing rollers are preferably variable respectively.

Further, a contact time of the tubular body and the first contour finishing roller, and a contact time of the tubular body and the second contour finishing roller ("contact time" means time during which the tubular body and the first or second roller contact) are preferably variable.

According to the invention described in claim 1, after the interior of the core bar is made vacuum and the inorganic fiber mat is drawn to the core bar, the core bar rotates so that the guide cover conventionally used can be omitted. Accordingly, deformation of the inorganic fiber mat caused by being in contact with the guide cover does not occur. Further, replacement of the guide cover is not required at the time of product changeover as in the conventional process, and therefore, cost of maintenance and equipment can be lowered.

According to the invention described in claim 6, the contour finishing is performed in the two steps. Therefore, the thickness of the tubular body can be kept substantially constant and occurrence of the problems of reduction in smoothness of the surface and variation in the outside diameter dimension (one-sided thickness and the like) and the like can be reduced. The tubular body is rotated before the contour is restrained by the first and the second fairing rollers, and therefore, occurrence of peeling, a scar and the like on the surface of the tubular body and breakage of the surface of the tubular body can be prevented. Further, the hollow cylindrical core bar provided with numerous pores on the surface is used, and therefore, the weight of the core bar can be reduced, so that occurrence of peeling, a scar and the like on the surface of the tubular body and breakage of the surface of the tubular body can be further prevented.

Other objects, characteristics, and advantages of the present invention will become apparent from the following description of an embodiment and an example of the present invention.

### BEST MODE FOR CARRYING OUT THE INVENTION

Hereinafter, a best mode for carrying out the present invention will be described in detail with reference to the drawings.

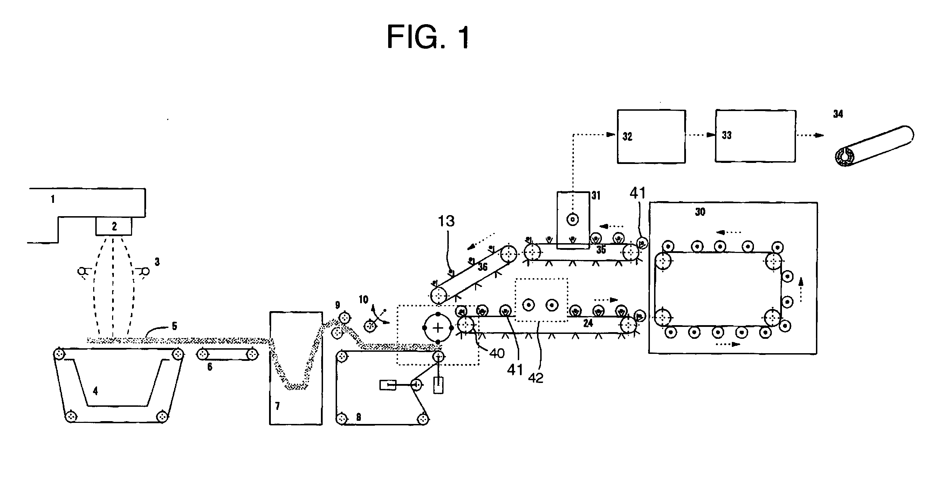

Fig. 1 is a schematic view for explaining a process for producing an inorganic fiber made heat insulation tube according to the present invention. In Fig. 1, a raw material for example, glass is melted in a melting furnace 1 (melting operation). As the raw material, recycled glass, a batch raw material and the like can be used. The furnace may be a conventional one using electric heating or gas heating. Next, the molten glass is fiberized by a fiberizing device 2 (fiberizing operation). For the fiberizing operation, a conventional device such as a centrifugal spinning machine can be used. Then, fibers are coated with an adhesive by an adhesive coating device 3 (adhesive coating operation), and are collected as an unhardened inorganic fiber mat 5 (hereinafter, called a mat 5) on a fiber collecting machine 4 (fiber collecting operation). After that, by a conveyor 6, the mat 5 is conveyed to a sag adjusting part 7, where a sag is added to the mat 5, and the mat 5 is conveyed onto a net conveyor 8 by a feed roller 9 (first delivering operation). The mat is cut into a proper length by a cutting roller 10 (first cutting operation), and then it is delivered to a wind-up part 40, where, it is wound up around a hollow cylindrical core bar to be a tubular body 41 (wind-up operation), and the tubular body 41 is delivered to a contour finishing part 42 by a conveyor 24 (second delivering operation). The tubular body 41 has its contour adjusted in the contour finishing part 42 (contour finishing operation), and is delivered to a dryer 30 by the conveyor 24. The tubular body 41 is dried in the dryer 30 (drying operation), and thereafter, is delivered to a core removing machine 31 by a conveyor 35, where the tubular body 41 and the core bar 13 are separated (core removing operation). Thereafter, the tubular body 41 is delivered to a width direction cutting part 32, and the core bar 13 is returned to the wind-up part 40 by the conveyor 36. The tubular body 41 is cut in the width direction in the cutting part 32 (second cutting operation), and is formed a slit cut in the longitudinal direction in a slit cutting part 33 to be a heat insulation tube product 34.

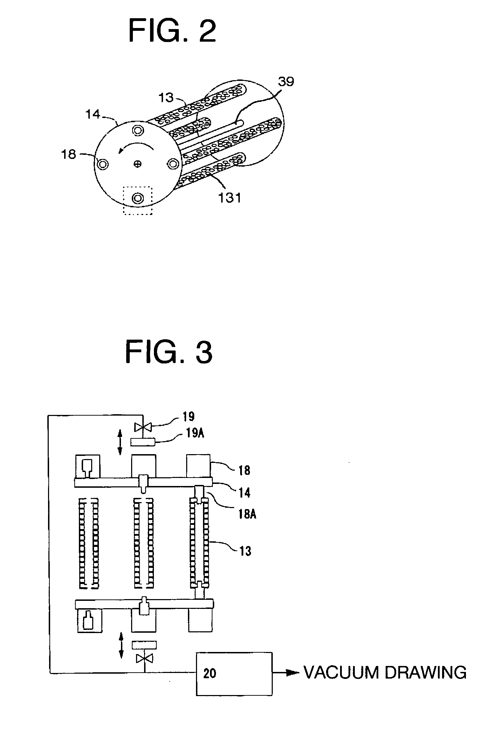

Fig. 2 is a perspective view of the main part of the wind-up part 40, and Fig. 3 is a plan view of the main part of the wind-up part 40.

The wind-up part 40 includes two rotatable rotary plates 14 provided at both ends of a shaft 39, and each rotary plate 14 includes four core bar holders 18 to be able to move the core bar 13 to the positions of four steps. The core bar holder 18 has a rotatable chuck 18A inside. The chucks 18A push in the core bar 13 from both its ends to fix it. The core bar 13 is formed as a hollow cylindrical core bar having its surface provided with numerous pores 131. As the number of pores 131 is larger, the mat 5 is favorably vacuum-sucked, but the strength of the core bar 13 reduces, and power required for vacuum drawing (displacement of the pump and the like) becomes large. A vacuum tank 20 is connected to a pair of core bar holders 18 via a suction port 19A and a changeover valve 19.

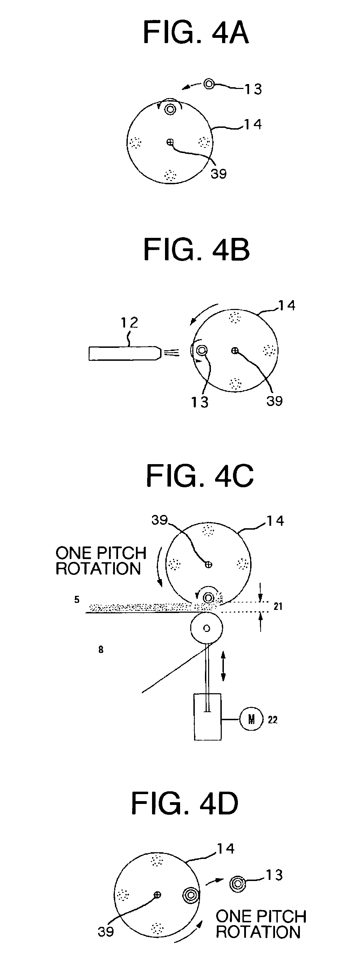

Next, the wind-up operation in the wind-up part 40 will be described referring Figs. 4A to 4D. As shown in Fig. 4C, a gap 21 between the net conveyor 8 and the rotary plate 14 is adjustable by a motor 22. The wind-up operation comprises four subdivided steps. In the first step, the core bar 13 delivered from the core removing machine 31 is fixed by the chucks 18A and rotated as shown in Fig. 4A. In the second step, the rotary plates 14 are rotated by one pitch around that shaft 39, and thereafter, the core bar 13 is heated by a heating burner 12 as shown in Fig. 4B. In the third step, as shown in Fig. 4C, the rotary plates 14 are rotated by one pitch, and thereafter, the suction port 19A connected to the vacuum tank 20 is connected to the core bar holder 18. Vacuum is introduced in the interior of the core bar 13 by the operation of the changeover valve 19 to start vacuum drawing through the numerous pores 131, and while the mat 5 is compressed between the core bar 13 and the net conveyor 8, the mat 5 is wound around the core bar 13 at a predetermined rotational speed. Vacuum drawing is stopped immediately after the start of wind-up operation. While winding the mat 5 around the core bar 13, the net conveyor 8 is continuously lowered by driving the motor 22 so that the gap 21 between the core bar 13 and the net conveyor 8 is continuously growing larger. The lowering distance can be set arbitrarily. In the fourth step, after the rotary plates 14 are rotated by one pitch, fixation by the chucks 18A is released, and the tubular body 41 is moved onto the conveyor 24 as shown in Fig. 4D.

The rotational speed of the core bar 13 is constant, for example, 30 m/minute. Alternatively, the rotational speed is set to 30 m/minute from the start of winding until one rotation, and thereafter, the rotational speed is set to 40 m/minute to enhance productivity.

Alternatively, the speed in the surface of the mat 5 during winding can be kept at substantially the same speed as the speed of the net conveyor 8. In this case, the rotational speed of the core bar 13 is reduced for each winding action during winding operation of the mat 5.

The speed of the net conveyor 8 and the winding speed (speed of the surface of the mat 5) of the core bar 13 are not limited to the same. The winding speed is preferably higher than that of the net conveyor 8. If the winding speed is lower than the speed of the net conveyor 8, the problems of folded wrinkle of the mat 5 and reduction in dimensional stability will occur. Contrarily, if the winding speed is too high, the forming density will be too large and the surface on the mat 5 will be fuzzy. Therefore, the difference between two winding speeds should be limited within 20%.

Though not illustrated, when the mat 5 is wound around the core bar 13, the mat 5 can be pressed against the core bar 13 by air blow. In the case of a mat with a large specific gravity such as rock wool, slag wool and ceramics wool, or a mat with a large mass per unit area (substantially 250 g/m² or larger) among inorganic fibers is used, the mat easily peels off the core bar due to the action of the centrifugal force by the rotation of the core bar 13, and therefore, in order to suppress this, air blow is used.

A diameter of each pore 131 is 2.5 mm to 5 mm, and is preferably 3 to 4.5 mm. If each pore has a diameter of less than 2.5 mm, enough force to suck the mat 5 cannot be obtained during vacuum drawing operation which will be described later. Contrarily, if the diameter of each pore exceeds 5 mm, the fibers of the mat 5 engage in the pores 131, and the core is difficult to be removed during the core removing operation. The larger the number of pores 131 is larger, the larger force for vacuum sucking the mat 5 becomes, but the strength of the core bar 13 reduces and higher power (displacement of the pump and the like) for vacuum drawing is needed.

In the wind-up operation, the core bar 13 is heated by the heating burner 12 as described above. The heating temperature is set at 150°C to 250°C. In the case of 150°C or lower, the adhesive is insufficiently dried, a trouble (especially, a trouble in core removal) in the subsequent operations may occur, and the quality of the finished products will be worse. In the case of 250°C or higher, the problem of burning of the mat 5 will occur.

The vacuum is introduced into the interior of the core bar 13 so that the interior is set at a predetermined pressure upon the mat 5 reaches the core bar 13. In more detail, the changeover valve 19 opens three to four seconds before the mat 5 reaches the core bar 13, and by suction using the vacuum tank 20 held at -60 cmHg, the internal pressure of the core bar 13 is reduced to -35 cmHg. The internal pressure of the core bar is set at -20 to -50 cmHg, preferably at -30 to -45 cmHg. With the internal pressure of the core bar higher than -20 cmHg, the suction force is insufficient and cause poor winding. On the other hand, with the internal pressure lower than -50 cmHg, the suction force becomes so large that the fibers of the mat 5 engage in the pores 131 of the core bar 13 and the core bar 13 becomes difficult to be removed. The retention time of the internal pressure (negative pressure) can be set to, for example, 1.2 seconds, but is preferably made variable. If the outside diameter of the core bar 13 is small, the retention time is made short, and if the outside diameter is large, the retention time is made long. With regard to the retention time, vacuum-drawing can be started upon the core bar 13 reaches the winding position and can be stopped upon the core bar 13 makes one rotation. If the retention time is too long, the fibers of the mat 5 engage in the pores 131 formed on the core bar 13, so that the core bar 13 cannot sometimes be removed in the core removing operation which will be carried out later, or the heat insulation tube as a production may be damaged. On the other hand, if the retention time is too short, the mat 5 is wound around the core bar 13 while the core bar 13 is not sufficiently bonded to the mat 5, and therefore, the density of the mat becomes low, or a wrinkle occurs to the surface of the mat. Further, due to the action of the centrifugal force by the rotation of the core bar 13, the mat 5 sometimes peels off from the core bar 13.

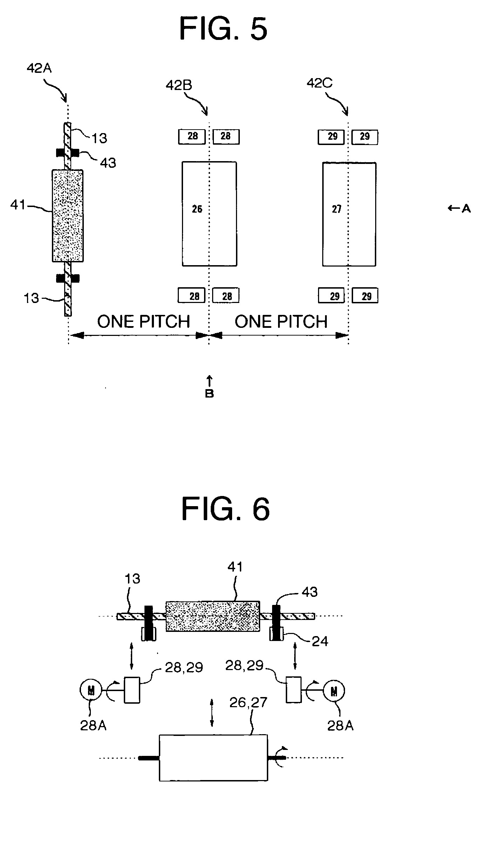

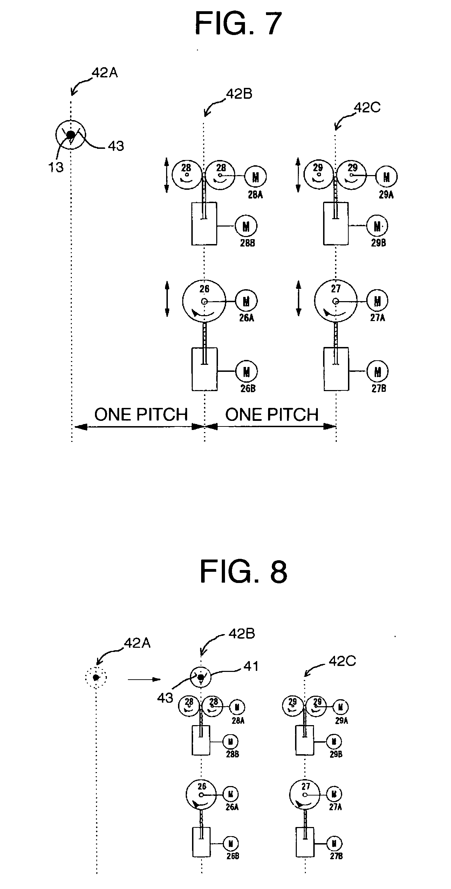

Fig. 5 is a plan view of the contour finishing part 42, Fig. 6 is an elevation seen from direction A in Fig. 5, and Fig. 7 is an elevation seen from direction B in Fig. 5. With regard to the relationship of the core bar 13 and the tubular body 41 at the time of finishing the wind-up operation, the length of the tubular body 41 is shorter than the length of the core bar 13, and therefore, the core bar 13 is extended outward from both ends of the tubular body 41 as shown in Figs. 4 and 5.

The contour finishing part 42 is provided with a start position 42A, a first contour finishing part 42B and a second contour finishing part 42C. At the illustrated start position 42A, a V-shaped attachment (core bar support member having an opened top) 43 for supporting the core bar 13 together with the tubular body 41 is provided. The V-shaped attachment 43 is fixed onto the conveyor 24, and the conveyor 24 intermittently moves by one pitch. By the intermittent movement, the V-shaped attachment 43 can move from the start position 42A to the first contour finishing part 42B and the second contour finishing part 42C by one pitch at each time. The core support member is not limited to the V-shaped attachment, but any support member may be used if only the top of the support member is opened, for example, a U-shaped attachment can be used.

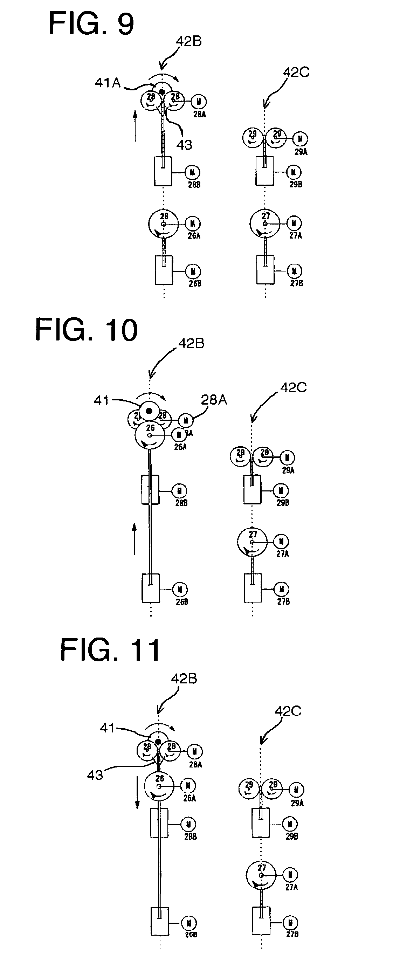

The first contour finishing part 42B is provided with a first fairing roller 26, and two pairs of core bar receiving rollers 28 which are provided to be slightly away from both ends of the first fairing roller 26 so that the core bar 13 together with the tubular body 41 can be supported therebetween. Each pair of core bar receiving rollers 28, 28 are provided with a little gap to be able to support the core bar 13 between the two rollers 28, 28. Accordingly, each pair of core bar receiving rollers 28, 28 can support the tubular body 41 with the core bar 13 by the gap therebetween them (see Fig. 9). Each of the core bar receiving rollers 28 is made rotatable by a motor 28A, and is made vertically movable by a motor 28B. Further, the first fairing roller 26 is made rotatable by a motor 26A and is made vertically movable by a motor 26B.

The constitution of the second contour finishing part 42C is substantially the same as the constitution of the first contour finishing part 42B, but differs from the constitution of the first contour finishing part 42B in only the point that the second fairing roller 27 has heating means not illustrated, and can be heated.

Next, the contour finishing operation carried out at the contour finishing part 42 will be described based on Figs. 7 to 18. The contour finishing operation is constituted of 12 subdivided steps.

In a first step, as shown in Fig. 7, the tubular body 41 is supported by the V-shaped attachments 43 at the start position 42A. In a second step, by the intermittent drive of the conveyor 24, the tubular body 41 is delivered to the first contour finishing part 42B with the V-shaped attachments 43 as shown in Fig. 8. In a third step, the core bar receiving rollers 28 are moved upwardly while rotated by the motor 28A and the motor 28B, and the core bar 13 and the tubular body 41 are pushed up from the V-shaped attachments 43 by a pair of core bar receiving rollers 28, 28 as shown in Fig. 9. In a fourth step, the first contour finishing roller 26 rises while rotated by the motor 26A and the motor 26B, contacts the rotating tubular body 41 and performs contour finishing (first contour finishing step), as shown in Fig. 10. In a fifth step, the first contour finishing rollers 28 are lowered by the motor 26B as shown in Fig. 11 to finish the first contour finishing operation. Next, in a sixth step, by lowering the core bar receiving rollers 28, the tubular body 41 is supported by the V-shaped attachments 43 as shown in Fig. 12. Since tubular body 41 separates from the core bar receiving rollers 28, rotation of the tubular body 41 stops. In a subsequent seventh step, the tubular body 41 is delivered to the second contour finishing part 42C by drive of the conveyor 24 as shown in Fig. 13.

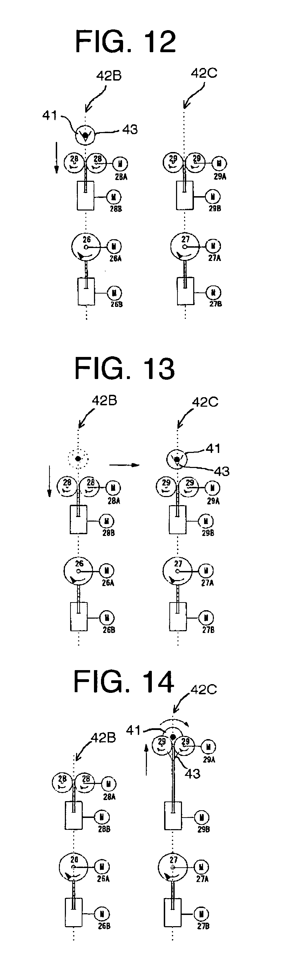

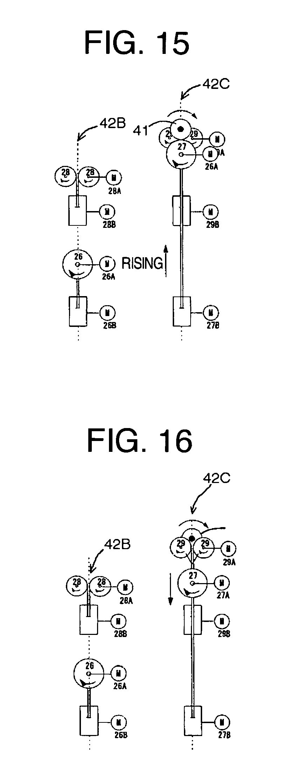

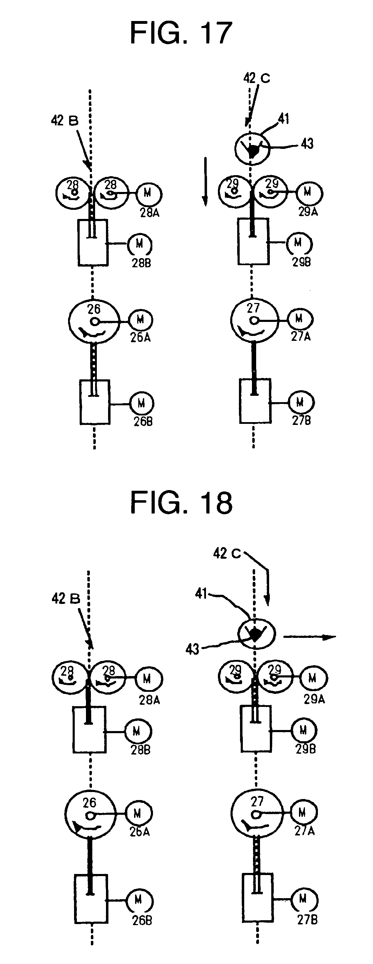

In an eighth operation, as shown in Fig. 14, a core bar receiving roller 29 rises while rotated by motors 29A and 29B, and pushes up the core bar 13 with the tubular body 41 from the V-shaped attachments 43, and the tubular body 41 is supported and rotated by the core bar receiving roller 29. In a ninth step, as shown in Fig. 15, a second contour finishing roller 27 rises while rotating to contact the rotating tubular body 41 to perform contour finishing (second contour finishing operation). The contour finishing roller 27 is heated by heating means. The heating temperature by the heating means is in the range of 250°C to 350°C, and is preferably 270°C to 320°C. If the heating temperature is lower than 250°C, the binder component is not sufficiently hardened. Therefore, the surface of the tubular body 41 may contact the fairing roller 27, and at the same time adheres to it or peels off. If the heating temperature is higher than 350°C, the problem in quality of burning and fuzzing of the surface of the tubular body 41, and the problem of increase in energy cost will occur. In a tenth step, as shown in Fig. 16, the second contour finishing roller 27 lowers to finish the second contour finishing operation. In an eleventh step, as shown in Fig. 17, the core bar receiving roller 29 is lowered, and the tubular body is supported by the V-shaped attachment 43. Here, the tubular body 41 separates from the core bar receiving roller 29, and therefore, rotation of the tubular body 41 stops. In a twelfth step, as shown in Fig. 18, by driving the conveyor 24 by one pitch, the tubular body 41 is delivered to the next operation (drying operation).

In the above-described example, the first contour finishing operation and the second contour finishing operation are each performed once (specifically, one set of the first fairing roller 26 and one set of the second fairing roller 27 are provided). However, it is preferable to repeat the first contour finishing operation by providing a plurality of sets of first fairing rollers 26 (specifically, by providing a plurality of first contour finishing parts 42B). In order to make the contour surface of the heat insulation tube favorable, and in order to decrease variation in the outside diameter dimension, it is preferable to increase the number of first contour finishing operations as described above. Meanwhile, if the number of first contour finishing parts 42B is increased, the equipment cost will be increased. Accordingly, in the case of the production speed is low (when one cycle time exceeds 15 seconds), the fairing time becomes long, and therefore, one or two sets of contour finishing rollers 26 are desirably provided. In the case of the production speed is high (when one cycle time is 15 seconds or shorter), the fairing time becomes short, and therefore, three or four sets of first contour finishing rollers 26 are desirably provided.

Only one set of the second contour finishing roller 27 is provided. If a plurality of sets of the roller is provided, the surface of the heat insulation tube is burnt to cause a defect.

As described above, the core bar receiving rollers 28, 29 are moved up and down by the respective motors 28B, 29B for vertical drive. In the illustrated example, the motors 28B, 29B is adopted as driving power, but the air pressure, hydraulic pressure and the like may be adopted. Similarly, the fairing rollers 26, 27 are moved up and down by the respective motors 26B and 27B for vertical drive. In the illustrated example, drive by the motors 26B and 27B are adopted as driving power, but air pressure, hydraulic pressure and the like may be adopted.

The rotational speeds of the core bar receiving rollers 28, 29 and the first and the second contour finishing rollers 26, 27 are preferably made variable respectively. By making the rotational speed variable, the rollers can be suitably used for various production speeds. Fairing by the first contour finishing roller 26 is more favorable when the rotational speed is higher. On the other hand, for fairing by the second contour finishing roller 27, its rotational speed can be small. This is because if the rotational speed is too high, the problem of burning of the surface and the like may occur.

Further, the contact time of the tubular body 41 and the first and the second contour finishing rollers 26, 27 is preferably made variable. By making the contact time variable, the rollers can be suitably used for various production speeds. Fairing by the first contour finishing roller 26 is more favorable when its contact time is longer. On the other hand, for fairing by the second contour finishing roller 27, its contact time can be shortened. This is because if the contact time is too long, the problem of burning of the surface and the like may occur.

In the drying and core removing operations, the tubular body 41 after going through the contour finishing operation is dried and hardened by the dryer 30, and thereafter, is separated to be the core bar 13 and the heat insulation tube by the core removing machine 31. The separated core bar 13 is delivered to the wind-up part 40 by the conveyor 36.

In the forming operation, the heat insulation tube is cut in the width direction to have a predetermined width dimension, and thereafter, formed a slit cut in the longitudinal direction so that the finished heat insulation tube product 34 is obtained. Example

Next, an example of the present invention will be described.

Glass was used as an inorganic fiber. In the melting operation, the glass was melted in a conventional furnace using electric heating. As the raw material, recycled glass, a batch raw material and the like were used.

For the fiberizing operation, a conventional centrifugal spinning machine was used.

The adhesive used in the adhesive coating operation if for example, a phenol resin, a urethane resin, an acrylic resin and the like, and the adhesive was coated by spray. The coating amount was about 8 w% of the total weight of the fibers and the adhesive.

In the fiber collecting operation, fibers were collected so that the mat 5 has a mass per unit area of 150 g/m² and a width of about 1080 mm. In the first delivery operation, the unhardened mat 5 formed by collecting the fibers was delivered by the conveyor 8, went through the sag adjusting part, and was supplied to the net conveyor 8 by the feed roller 9.

In the subsequent first cutting operation, the mat 5 was cut into a length of 4.56 m by the cutting roller 10. The net conveyor 8 was moved at a speed of 30 m/minute and the mat 5 was fed to the wind-up part 40.

The core bar 13 having an outside diameter of 42.7 mm and 16 pores 131, each with a diameter of 4mm, formed on its outer peripheral was used.

In this example, the initial setting of the gap 21 between the core bar 13 and the net conveyor was 3 mm, but the gap 21 can be set arbitrarily in accordance with the weight and/or thickness of the mat 5. The winding was started, the net conveyor 8 was lowered by 3 mm by the motor 22 each time the core bar 13 made one rotation, and this was continued until the winding was finished. The retention time of the negative pressure in the winding operation was made 1.2 seconds. Further, the number of windings, that is, the rotational frequency of the core bar 13 was made 12.

The speed of the core bar 13 or of the surface of the mat 5 during winding was kept at 30 m/minute which is the same speed as that of the net conveyor 8.

In the second delivering operation, the unhardened mat 5 (tubular body 41) after finishing winding was released from fixation by the chuck 18A after the rotary plate 14 was rotated by one pitch, and the tubular body 41 was moved onto the V-shaped attachments (core bar support members) 43 provided at the conveyor 24, and was delivered to the next operation by the conveyor 24.

Next, in the contour finishing operation, the tubular body 41 supported by the V-shaped attachments 43 attached to the conveyor 24 was moved from the start position 42A to the first contour finishing part 42B and the second contour finishing part 42C by one pitch at each time to perform contour restraining.

The core bar receiving rollers 28, 29 are rotated by the respective motors 28A and 29A for rotational drive. In this example, the rotational frequency of the motor 28A was set to 20.2 rpm, and the rotational frequency of the motor 29A was set to 10.1 rpm. The rotational frequency can be adjusted in accordance with the kind of product and the finished condition of the contour.

The time in which the tubular body is located in the position for performing contour finishing on the tubular body lifted up and rotated by the core bar receiving rollers 28, 29, that is, the time in which the contour finishing is possible was set to 14 seconds for both the first contour finishing part and the second contour finishing part. The time can be also adjusted in accordance with the kind of product.

The fairing rollers 26, 27 are rotated by the respective motors 26A and 27A for rotational drive. In this example, the rotational frequency of the motor 26A was set to 32 rpm, and that of the motor 27A was set to 16 rpm. The rotational frequency can be adjusted in accordance with the kind of product.

The time of contour restraining, that is, the time in which each of the fairing rollers 26, 27 is in contact with the tubular body 41 was set to 8.3 seconds for the first fairing roller 26, and was set to 5 seconds for the second fairing roller 27. The time can be also adjusted in accordance with the kind of product.

Thereafter, the tubular body went through the drying and core removing operations, the second cutting operation in the width direction cutting part 32 and the slit cutting operation, and finally the heat insulation tube product 34 was obtained. In the width direction cutting part, the tubular body 41 was cut so that the length of it was about 1000 mm.

The above description was made with regard to the embodiment and example shown in the drawings, but the present invention is not limited to them, and it is obvious to those skilled in the art to be able to make various modifications and revisions within the spirit of the present invention and the scope of the accompanying claims.

### BRIEF DESCRIPTION OF THE DRAWINGS

Fig. 1 is a schematic view for explaining a process for producing an inorganic fiber made heat insulation tube according to the present invention;
Fig. 2 is a perspective view of a main part of a wind-up part;
Fig. 3 is a plan view of the main part of the wind-up part;
Fig. 4A is a schematic view showing a first step of a wind-up operation;
Fig. 4B is a schematic view showing a second step of the wind-up operation;
Fig. 4C is a schematic view showing a third step of the wind-up operation;
Fig. 4D is a schematic view showing a fourth step of the wind-up operation;
Fig. 5 is a plan view of a contour finishing part;
Fig. 6 is an elevation seen from direction A in Fig. 5;
Fig. 7 is an elevation seen from direction B in Fig. 5, showing a first step of a contour finishing operation;
Fig. 8 is a schematic view showing a second step of the contour finishing operation;
Fig. 9 is a schematic view showing a third step of the contour finishing operation;
Fig. 10 is a schematic view showing a fourth step of the contour finishing operation;
Fig. 11 is a schematic view showing a fifth step of the contour finishing operation;
Fig. 12 is a schematic view showing a sixth step of the contour finishing operation;
Fig. 13 is a schematic view showing a seventh step of the contour finishing operation;
Fig. 14 is a schematic view showing an eighth step of the contour finishing operation;
Fig. 15 is a schematic view showing a ninth step of the contour finishing operation;
Fig. 16 is a schematic view showing a tenth step of the contour finishing operation;
Fig. 17 is a schematic view showing an eleventh step of the contour finishing operation; and
Fig. 18 is a schematic view showing a twelfth step of the contour finishing operation.

## Claims

1. A process for producing an inorganic fiber made heat insulation tube having a fiberizing and fiber collecting operation of fiberizing molten glass or a molten mineral and coating it with an adhesive to make it an unhardened inorganic fiber mat, a wind-up operation of winding the inorganic fiber mat around a cylindrical core bar to make it a tubular body, a contour finishing operation of adjusting a contour of the tubular body, a drying operation of drying the tubular body and a core removing operation of separating the tubular body from the core bar,
wherein the wind-up operation comprises the steps of:
supporting and rotating a hollow cylindrical core bar having a surface provided with numerous pores,
heating the core bar,
introducing vacuum in an interior of the core bar, drawing the inorganic fiber mat to the core bar by vacuum drawing, thereafter, rotating the core bar at a predetermined rotational speed while compressing the inorganic fiber mat, and winding the inorganic fiber mat around the core bar to obtain a tubular body, and
delivering the tubular body to a position where a subsequent contour finishing operation is performed.

2. The process for producing an inorganic fiber made heat insulation tube according to claim 1,
**characterized in that** retention time of the vacuum drawing is variable.

3. The process for producing an inorganic fiber made heat insulation tube according to claim 1, **characterized in that** in the step of winding the inorganic fiber mat around the core bar, the inorganic fiber mat is pressed against the core bar by air blow.

4. The process for producing an inorganic fiber made heat insulation tube according to claim 1, **characterized in that** the rotational speed of the core bar is constant.

5. The process for producing an inorganic fiber made heat insulation tube according to claim 1, **characterized in that** the rotational speed of the core bar is variable.

6. A process for producing an inorganic fiber made heat insulation tube having a fiberizing and fiber collecting operation of fiberizing molten glass or a molten mineral, and coating it with an adhesive to make it an unhardened inorganic fiber mat, a wind-up operation of winding the inorganic fiber mat around a cylindrical core bar to make it a tubular body, a contour finishing operation of adjusting a contour of the tubular body, a drying operation of drying the tubular body and a core removing operation of separating the tubular body from the core bar,
wherein the contour finishing operation comprises the steps of:
delivering the tubular body onto a first contour finishing roller, by using a core bar support member with an opened top, after the tubular body together with the core bar being delivered from the wind-up operation, the core bar having both ends extending from both ends of the tubular body, the core bar support member supporting the both ends of the core bar,
supporting and rotating the both ends of the core bar extending from both the ends of the hollow cylindrical tubular body by two pairs of core bar receiving rollers,
fairing a contour of the tubular body by an unheated first contour finishing roller,
delivering the tubular member onto a second contour finishing roller, by using a core bar support member having both ends extending from both ends of the tubular body, the core bar support member supporting the both ends of the core bar,
supporting and rotating the ends of the core bar extending from the both ends of the tubular body by two pairs of core bar receiving rollers, and
fairing the contour of the tubular body by a heated second contour finishing roller.

7. The process for producing an inorganic fiber made heat insulation tube according to claim 6, **characterized in that** at least one set of the first contour finishing roller, and one set of the second contour finishing roller are provided.

8. The process for producing an inorganic fiber made heat insulation tube according to claim 6, **characterized in that** rotational speeds of the core bar receiving roller, and of the first and the second contour finishing rollers are variable, respectively.

9. The process for producing an inorganic fiber made heat insulation tube according to claim 6, **characterized in that** contact time of the tubular body and the first contour finishing roller, and contact time of the tubular body and the second contour finishing roller are variable.
